# FASCICULE DE BREVET EUROPEEN

(11) **EP 0 847 882 B1**
(45) Date de publication et mention de la délivrance du brevet: **25.07.2001**
(21) Numéro de dépôt: 97420220.2
(22) Date de dépôt: 26.11.1997
(51) Int. Cl.: B60F 1/04

(54) **Véhicule route-rail pour travaux ferroviaires**
Zweiwegefahrzeug für Gleisbauarbeiten
Railroad vehicle for railway works

(30) Priorité: 12.12.1996 FR 9615526
(43) Date de publication de la demande: 17.06.1998
(73) Titulaire: ECOMECA, 69330 Pusignan (FR)
(72) Inventeur: Brissaud, Dominique, 38460 Optevoz (FR)
(74) Mandataire: Perrier, Jean-Pierre

(56) Documents cités:
- FR-A- 1 400 786
- GB-A- 858 317
- US-A- 4 060 035

## Description

L'invention est relative à un véhicule route-rail pour travaux ferroviaires, et plus particulièrement à un tel véhicule selon les caractéristiques du préambule de la revendication indépendante 1.

Pour procéder à des travaux sur les voies ferrées ou sur le matériel ou les équipements disposés le long de celles-ci, il est connu d'avoir recours à des véhicules routiers comportant une adaptation leur permettant de circuler sur les rails.

Dans FR-A-2 718 082 le châssis du véhicule, muni d'une plate-forme de réception d'outils divers, est équipé d'un premier jeu de roues pour la circulation sur routes et d'un second jeu de roues pour la circulation sur rails. Les essieux de roues du second jeu sont parallèles aux essieux du premier jeu et sont portés par des moyens aptes à les déplacer entre une position d'effacement, dans laquelle leurs roues sont au dessus du sol, et une position de travail, dans laquelle ces roues sont au dessous du plan d'appui des roues du premier jeu.

Avec cette structure, pour utiliser la fonction de roulement sur rails, il faut d'abord amener le véhicule dans l'alignement des rails et au dessus de ceux-ci. Si cela est facile avec les rails de tramways qui viennent au niveau de la chaussée, au moins dans les zones de croisement de la voie ferrée avec une voie routière, cette mise en position est déjà plus difficile pour les rails des réseaux ferroviaires, car ces rails sont bien souvent disposés en remblai et ne comportent des passages à niveaux que de manière très espacée.

On connaît également par FR-A-2 723 552, un engin rail-route dans lequel d'une part, les quatre roues du premier jeu de roues pour route sont motorisées, tandis que les roues du second jeu de roues pour rail ont des axes de rotation qui sont perpendiculaires à ceux des roues du premier jeu et sont portés par un dispositif permettant de les amener d'une position d'effacement à une position de travail, dans laquelle elles sont en appui sur les rails de la voie ferrée.

Un tel engin peut, par ses roues motorisées pour route, être amené perpendiculairement à la voie ferrée et gravir le remblai de celle-ci pour amener les roues pour rails en alignement avec les rails, et au-dessus de ceux-ci.

Dans cet engin, les roues montées sur pneumatiques sont motorisées mais ne disposent d'aucune directivité. De plus, elles ne permettent que des déplacements à vitesse réduite, ce qui nécessite de disposer l'engin sur une remorque pour en assurer le transport entre deux chantiers.

Un autre inconvénient de cet engin est que, après l'avoir descendu de sa plate-forme de transport, il faut l'amener perpendiculairement à la voie, et cela soit manuellement, soit par la motorisation de ses roues. Cela nécessite de disposer sur le côté de la voie d'un espace de manoeuvre qui ne se rencontre pas partout. En d'autres termes l'utilisation de cet engin est limité aux voies comportant de larges espaces de part et d'autre des rails.

Le brevet français 1 400 786, qui représente un véhicule selon les caractéristiques du préambule de la revendication indépendante 1, décrit une remorque de chantier comportant un train de roues pour circulation sur route, deux trains de roues pour circulation sur rails, ces roues ayant des axes de rotation parallèles à ceux des roues pour route et un troisième jeu de quatre roues pour circulation sur une voie auxiliaire, transversale à la voie principale, ces dernières roues étant portées chacune par un bras articulé sur le châssis et pouvant occuper une position d'effacement et une position de travail, dans laquelle la roue est en appui sur la voie transversale avec son axe de rotation perpendiculaire à ceux des autres roues. Une telle remorque dispose donc des roues affectées à une fonction, respectivement de circulation sur route, de circulation longitudinale sur rail ou de circulation transversale sur rail, mais nécessite une voie auxiliaire amovible et de nombreuses interventions humaines pour monter la voie auxiliaire et manoeuvrer les bras portant les roues pour rails.

De ce fait, l'enraillage de la remorque sur la voie ou son déraillage exige du temps, ce qui incompatible avec les besoins du service d'entretien des voies disposant de quelques heures pour circuler sur les voies pendant l'arrêt nocturne de la circulation des trains.

La présente invention a pour objet de remédier aux inconvénients des dispositifs actuels en fournissant un véhicule route-rail pouvant se déplacer seul, sur routes et sur rails et venir, rapidement et sans aide extérieure, parallèlement à la voie ferrée, puis, au dessus de celle-ci, éventuellement après avoir gravi le remblai s'il en existe un.

A cet effet dans le véhicule route-rail selon l'invention, le troisième jeu de roues est muni d'un pneumatique et est lié au rotor d'un moteur hydraulique à sens de rotation réversible, ce moteur étant porté par un bras articulé 24 et commandé par au moins un boîtier comportant une commande manuelle agissant séparément au moins sur les moteurs disposés de chacun des côtés du troisième jeu de roues, tandis que chacun des bras portant ces moteurs est relié au châssis par un vérin hydraulique à double effet dont la commande d'alimentation est indépendante de celles des vérins des autres bras.

De façon connue, en position de circulation sur route le train de roues pour rails et le train de roues pour les déplacements transversaux sont en position escamotée, c'est-à-dire sont relevées. Dans ces conditions le véhicule peut circuler librement et se diriger par ses moyens habituels. Il peut ainsi, sans difficulté, à un passage à niveau, venir directement sur la voie ferrée, mais aussi, dans une section courante de voie, venir se disposer parallèlement au remblai portant la voie. Dans cette position, le troisième jeu de roues est amené de sa position escamotée à sa position de travail, position dans laquelle les roues pour la circulation pour routes sont surélevées par rapport au sol.

A ce stade, la motorisation des roues du troisième jeu est alimentée pour provoquer le déplacement transversal du véhicule, déplacement lui permettant de gravir le remblai et de venir au dessus des rails jusqu'à coïncidence de ses roues pour rails avec ces rails. Les roues pour rails sont alors abaissées pour venir en contact avec le rail, puis les roues du troisième jeu sont ramenées en position d'escamotage.

Dans cette phase d'enraillage, l'indépendance de la commande d'alimentation de chacun des moteurs de roue permet, en cas de besoin, d'alimenter dans un sens les moteurs des roues disposée d'un côté, par exemple sur l'avant du véhicule, et dans l'autre sens les moteurs des roues disposées de l'autre côté, par exemple sur l'arrière du véhicule, afin de faire pivoter le véhicule sur lui-même. Cela réduit l'espace disponible nécessaire à un cercle ayant pour diamètre la longueur du véhicule, et favorise donc l'enraillage dans les zones de bordure de voies disposant de peu d'espace.

Cette indépendance d'alimentation permet aussi de fractionner l'enraillage en amenant d'abord une paire de roues pour rail, par exemple celles avant, au dessus des rails de la voie, puis en amenant et positionnant après l'autre paire de roues pour rail. Cela facilite la manoeuvre de positionnement et réduit le temps d'enraillage.

Quant à l'indépendance de l'alimentation des vérins de bras, elle permet, lors de la montée ou de la descente d'un remblai ou du passage sur les voies, d'adapter l'inclinaison des bras afin que, la plate-forme reste horizontale, ou au contraire, qu'elle soit légèrement inclinée pour transférer une partie opposée à celle de la charge sur les roues opposées à celles devant franchir un obstacle ou circulant encore sur un remblai à forte déclivité.

Ces diverses manoeuvres peuvent être effectuées par un seul homme, depuis la cabine du véhicule ou à l'extérieur de celle-ci à partir d'un boîtier de commande. Elles nécessitent un temps réduit, de l'ordre de 3 minutes, Cette rapidité est particulièrement intéressante pour les travaux sur les voies très fréquentées qui ne peuvent être libérées que sur une tranche horaire nocturne de faible ampleur, car elle augmente le temps laissé aux déplacements et aux travaux sur la voie.

Dans une forme d'exécution de l'invention, la commande d'alimentation des vérins d'actionnement des bras du troisième jeu de roues comprend des distributeurs, des moyens commandant ces distributeurs et, en parallèle à ces moyens de commande, un correcteur d'assiette apte à maintenir horizontale la plate-forme porte-outil, ce correcteur d'assiette étant associé à des moyens permettant d'interrompre sa liaison avec le circuit électrique de commande des distributeurs.

Le correcteur d'assiette peut ainsi soit être en fonction, pour maintenir l'horizontabilité de la plate-forme, pendant les déplacements transversaux du véhicule dans les phases d'enraillage ou de déraillage, soit être mis hors circuit, pour permettre à l'opérateur, en commandant l'inclinaison de la plate-forme, de transférer une partie de la charge sur les roues rencontrant une moindre résistance.

D'autres caractéristiques et avantages ressortiront de la description qui suit en référence au dessin schématique annexé représentant, à titre d'exemples, deux formes d'exécution de ce véhicule.

Figures 1 à 3 sont des vues de côté en élévation représentant le véhicule lorsqu'il est, respectivement, en position de circulation sur route, en position de circulation transversale et en position de circulation sur rails.

Figure 4 est une vue en plan par dessus du châssis seul, lorsque le véhicule est en position de circulations sur rails.

Figures 5 et 6 sont des vues par l'arrière du véhicule respectivement lorsqu'il gravit un remblai et après mise en place des roues pour reculs sur les rails.

Figures 7 et 8 sont des vues en élévation respectivement de côté, et plan par dessus d'une autre forme d'exécution, lorsque le véhicule est respectivement sur rail et en position de transfert transversal.

Figure 9 représente le schéma hydraulique et électrique des moyens de commande des deuxième et troisième jeux de roues.

Figure 10 est une vue en élévation par l'arrière du véhicule lors de son transfert sur les voies.

Figure 11 est une vue par l'arrière montrant la trajectoire de déplacement d'une roue 23 de transfert transversal entre ses positions respectivement de travail et d'escamotage.

Dans ce dessin la référence numérique 2 désigne le châssis d'un véhicule routier supportant une cabine 3 et une plate-forme 4 et équipé d'un premier jeu A de roues pour circulation sur route à savoir un essieu avant 5 équipé de roues directrices 6 et un essieu arrière 7 équipé de roues motrices 8. La plate-forme 4 peut recevoir divers outils et par exemple l'embase rotative 9 des bras élévateurs 10 d'une nacelle 12.

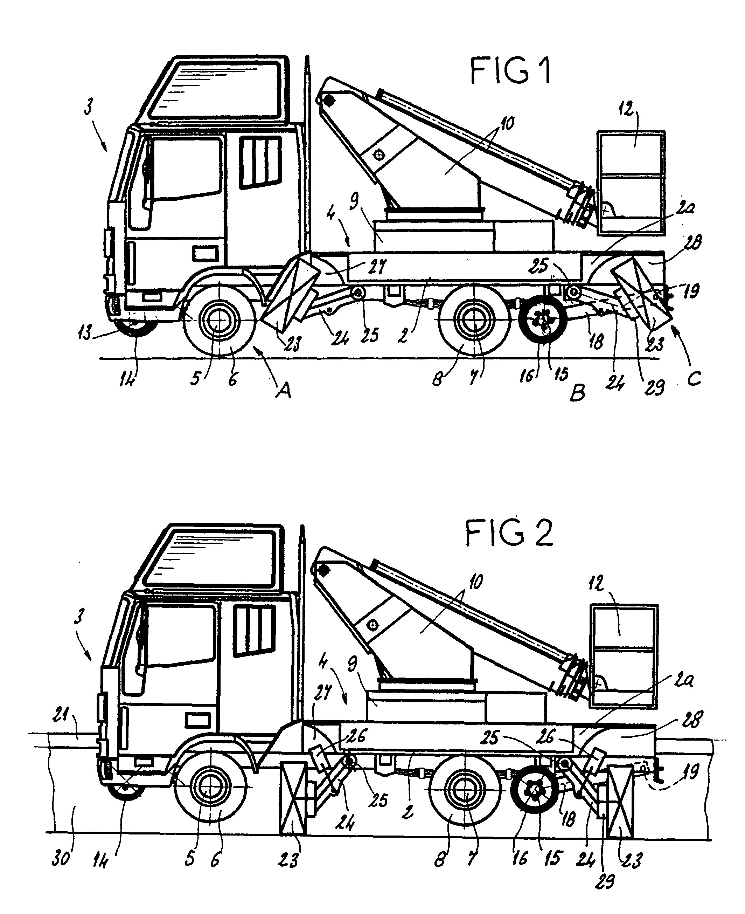

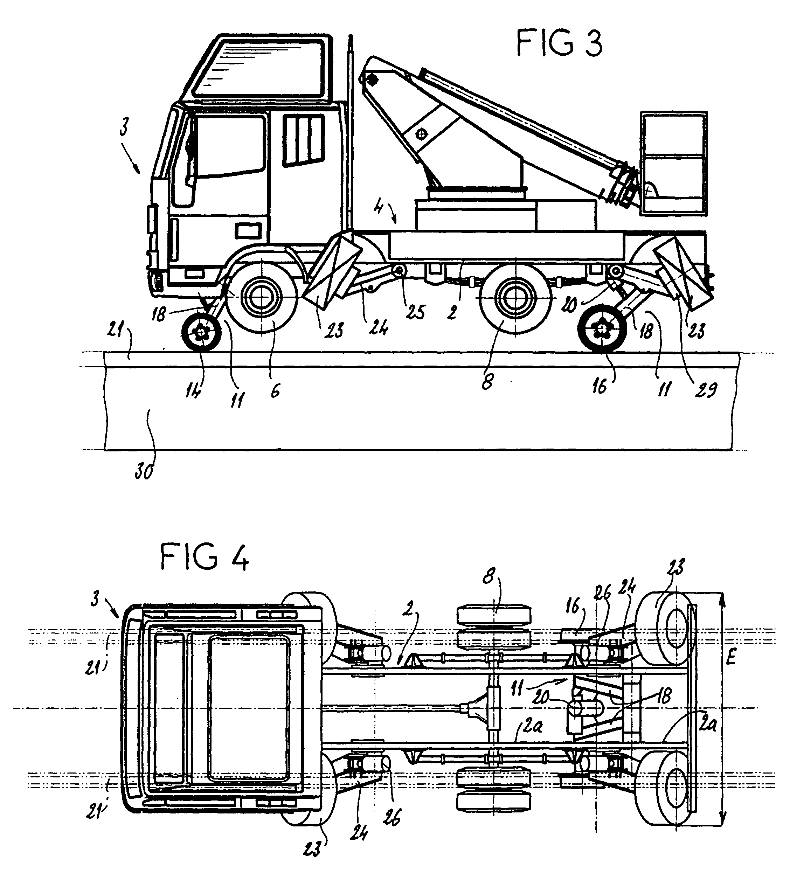

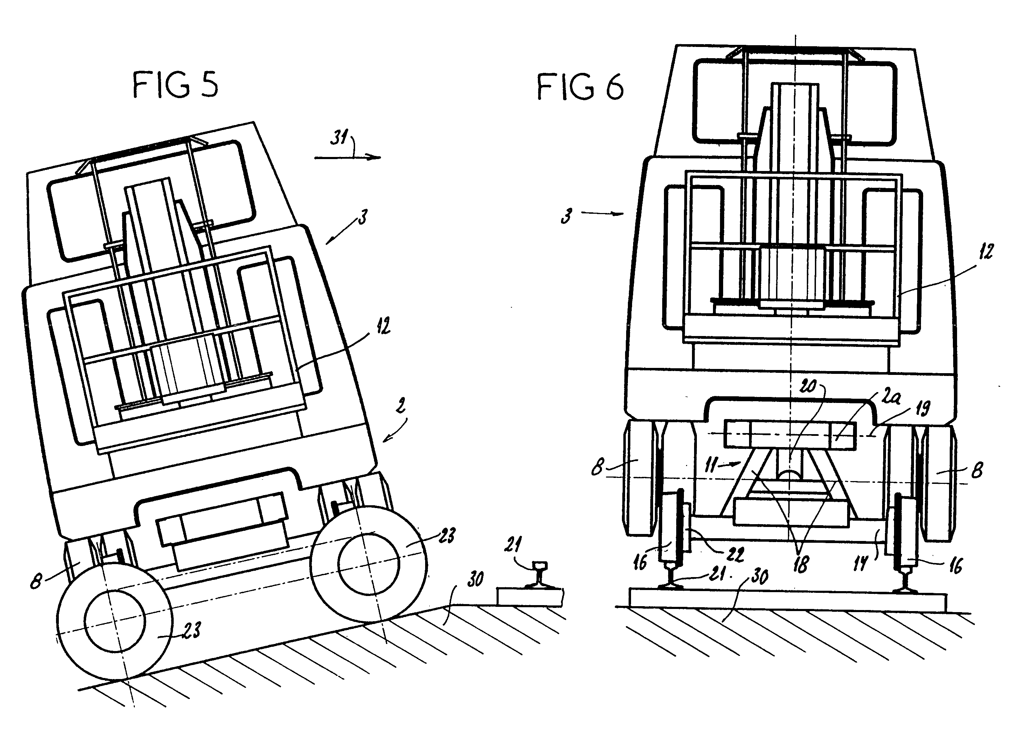

Le châssis est également équipé d'un second jeu B de roues pour rails composé d'un essieu avant 13 pour deux roues 14 et d'un essieu arrière 15 pour deux roues 16. Chaque essieu 13 et 15 est porté par un lorry 11 composé d'un fourreau 17, visible figure 6, lui-même fixé transversalement à l'extrémité de bras oscillants 18, articulés autour d'un axe transversal 19 (fig. 2) par rapport aux longerons 2a du châssis 2. Chaque lorry peut osciller entre une position escamotée, représentée aux figures 1 et 2, et une position de travail, représentée à la figure 3, grâce à au moins un vérin hydraulique 20 à double effet, dont le corps est articulé sur le châssis et dont la tige est articulée sur le lorry 11.

La figure 1 montre que lorsque les roues pour rails sont en position escamotée elles sont au dessus des plans d'appui des roues 6 et 8 du premier jeu A de roues, tandis que lorsqu'elles sont en position de travail, en appui sur les rails 21 comme montré à la figure 3, ces roues pour rails 14 et 16 sont en dessous du plan d'appui des roues 6 et 8, qui sont alors surélevées, en même temps que le châssis. Chacune des roues pour rails 14 et 16 est liée au rotor d'un moteur hydraulique 22 assurant son entraînement en rotation.

Le châssis 2 est également équipé d'un troisième jeu de roues 23 permettant de le déplacer transversalement. Chacune de ces roues est montée libre en rotation à l'extrémité d'un bras 24 dont l'autre extrémité est reliée au châssis 2 par une articulation 25. Dans la forme d'exécution représentée figures 1 à 6, cette articulation 25 s'effectue autour d'un axe transversal et horizontal. Chaque bras 24 est relié au châssis par un vérin hydraulique à double effet 26 (figure 2) dont le corps est articulé sur le châssis et dont la tige est articulée sur le bras. La figure 2 montre que, lorsque les roues 23 du troisième jeu C sont en position de travail, leurs axes de rotation sont parallèles au sol et perpendiculaires aux axes de rotation des roues des deux autres jeux A et B. Chaque roue 23 est reliée au rotor d'un moteur réversible hydraulique 29 assurant son entraînement en rotation et dont le corps est fixé sur le bras 24 correspondant.

Lorsque le véhicule est en position de circulation sur route, comme montré à la figure 1, les roues 23 sont en position escamotées et sont en partie logées dans des cavités antérieures 27 et postérieures 28, ménagées latéralement aux longerons 2a du châssis 2. Dans cette position, ces roues sont au dessus du plan d'appui des roues 6 et 8 de circulation sur route.

Les commandes d'alimentation des vérins 20 et 26 commandant le basculement des bras 18 et 24, respectivement du second jeu B et du troisième jeu C de roues, de même que les commandes d'alimentation des moteurs hydrauliques d'entraînement, respectivement 22 et 29, des roues pour rails 14 et 16 et des roues 23 pour le déplacement transversal, peuvent être doublées et disposées d'une part dans la cabine 3 et d'autre part sur un boîtier extérieur, accessible à côté, ou depuis la plate-forme 4.

Un tel véhicule peut circuler librement aussi bien sur routes que le long d'un ballast de voies, par exemple pour venir se positionner parallèlement aux rails de la voie dans la zone où les travaux doivent être effectués. On notera que ce positionnement s'effectue d'autant plus aisément que le conducteur du véhicule bénéficie de la directivité des roues avant 6.

Lorsque le véhicule est positionné longitudinalement son conducteur actionne l'alimentation des vérins hydrauliques 26 provoquant l'abaissement des bras 24. Ce pivotement des bras amène d'abord les roues 23 en contact avec le sol puis provoque le soulèvement de l'ensemble du châssis jusqu'à ce que les plans d'appui des roues 6 et 8 s 1 élèvent par rapport à ce sol. A la fin de cette opération le véhicule se retrouve dans la position représentée à la figure 2. A ce stade le conducteur provoque l'alimentation des moteurs hydrauliques 29 disposés dans les roues 23 pour déplacer le véhicule en direction du ballast 30, comme montré par la flèche 31 à la figure 5. Cette figure montre d'ailleurs que lorsque les roues 23 sont équipées de pneumatiques basse pression le gravissement du ballast s'effectue sans qu'il y ait lieu d'avoir recours à une rampe complémentaire.

Dès que les roues pour rails 14 et 16 sont au dessus des rails 21 d'une voie, le déplacement transversal du véhicule est interrompu et il est procédé à l'abaissement des bras 18 portant les roues pour rails. Ce déplacement est interrompu dès que ces roues pour rails sont en contact avec les rails. A partir de là les roues 23 assurant le déplacement transversal sont ramenées en position escamotée, comme montré à la figure 3, pour ne pas gêner le déplacement du véhicule. On notera que le point d'appui des roues pour rails 14 et 16 sur les rails 21 sont en dessous du point d'appui des roues 6 et 8 pour le déplacement sur route.

L'ensemble de ces opérations s'effectuent très rapidement et peuvent être réalisées par un seul homme, aussi bien pour la mise en place du véhicule sur les rails que pour son retour sur le côté du ballast. La figure 4 montre que lorsque le troisième jeu de roues 2 3 est en position escamotée, ces roues 23 modifient peu l'encombrement transversal E du véhicule qui s'intègre ainsi parfaitement dans le gabarit routier.

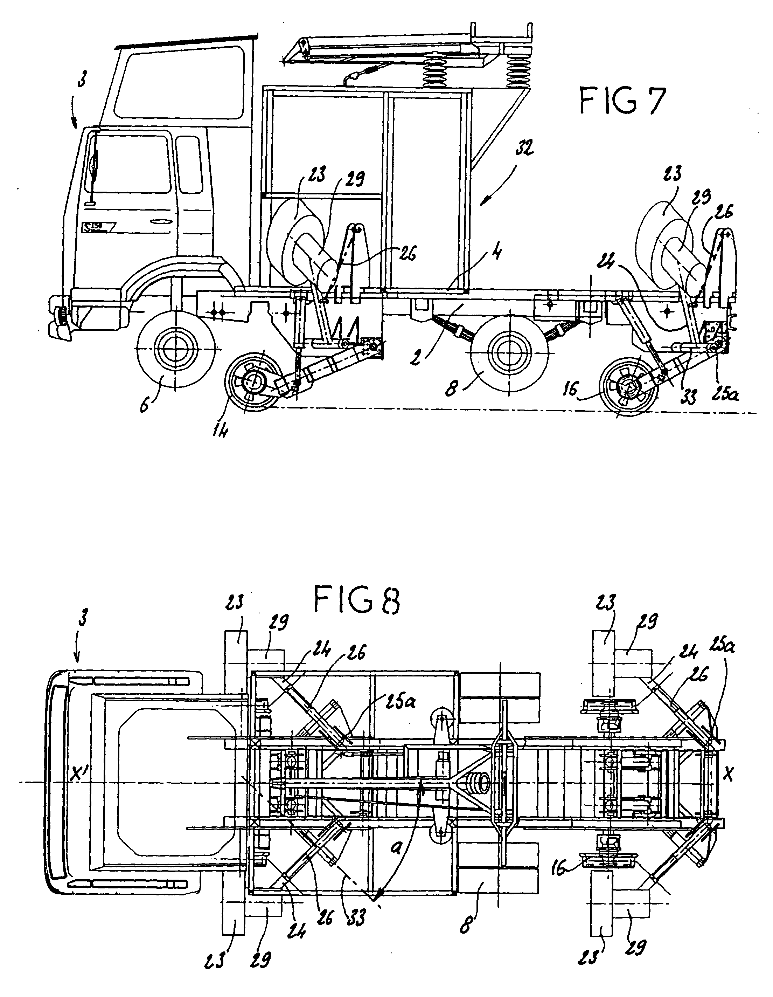

La forme d'exécution représentée aux figures 7 et 8 se différencie de la précédente par les moyens 32 portés par la plate-forme 4 et par l'orientation de l'axe de rotation 33 de l'articulation 25a de chacun des bras 24 portant les roues 23 et les moteurs hydrauliques 29. En effet, chaque axe de rotation 33, s'il est toujours dans le plan horizontal, est incliné, dans celui-ci, par rapport à l'axe longitudinal x'x du véhicule. Cette inclinaison qui est tournée vers l'arrière, en allant de l'intérieur vers l'extérieur du véhicule, à une valeur qui est de l'ordre de 45°.

Cet agencement permet, lors du pivotement de chaque bras 24 par son vérin 26, par exemple pour passer de sa position de travail à sa position escamotée, de faire décrire à la roue 23 correspondante, une trajectoire elliptique 34, qui, comme montré figure 11, est moins débordante que la trajectoire circulaire 35 qui serait décrite par rotation autour d'un axe de rotation 36 parallèle à l'axe longitudinal du véhicule. Ainsi, la trajectoire 34 reste dans le gabarit F imposé, c'est-à-dire dans l'encombrement toléré pour tout mobile circulant sur la voie, et ne risque pas de heurter un train circulant sur l'autre voie.

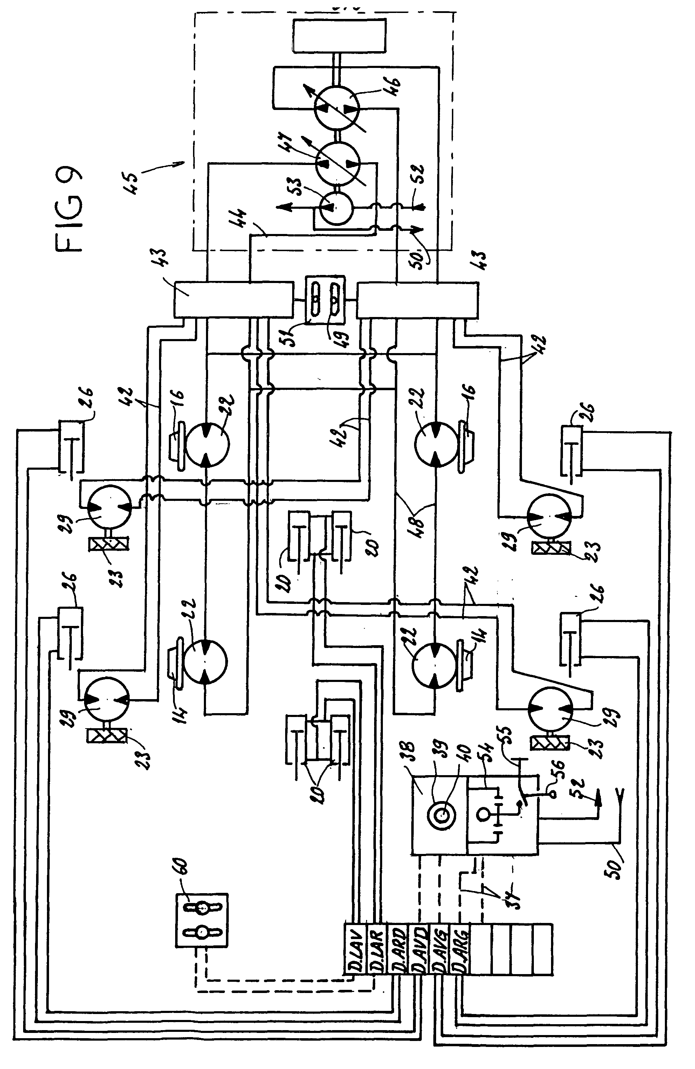

Dans ce véhicule, comme dans celui de la forme d'exécution précédente et comme montré figure 9, chacun des vérins 26 est alimenté hydrauliquement par une commande distincte, indépendante de celle des autres vérins 26, et constituée par un distributeur électromagnétique, respectivement pour l'arrière droit D.ARD, pour l'arrière gauche D.ARG, pour l'avant droit D.AVD et pour l'avant gauche D.AVG. Ces distributeurs sont reliés par des circuits électriques 37 à au moins un boîtier de commande 38 comprenant soit un moyen d'actionnement manuel pour chaque bras 24, soit un unique levier 39 faisant partie d'une commande universelle 40, actionnant tout ou partie des distributeurs.

De même, chacun des moteurs hydrauliques 29 d'entraînement réversible des roues 23 est alimenté unitairement par un circuit 42 distinct et indépendant de celui des autres moteurs. Ce circuit relie chaque moteur 29 à un sélecteur 43, lui même relié par un circuit 44 à un groupe hydraulique 45. Dans cette réalisation, les sélecteurs sont au nombre de deux, et permettent chacun d'orienter le débit d'un pompe hydraulique à débit variable, respectivement 46 ou 47, soit sur les circuits 42 d'alimentation des moteurs hydrauliques 29, soit sur un circuit 48 d'alimentation des moteurs hydrauliques 22 d'entraînement des roues pour rail 14 et 16. Un boîtier de commande 51 permet de régler le débit et le sens d'alimentation des moteurs 29 et des moteurs 22. Une double commande manuelle 49 permet d'alimenter dans un sens les moteurs 29 disposés d'un côté, et par exemple ceux disposés sur les bras 24 respectivement avant droit D.AVD et avant gauche D.AVG, et d'alimenter dans l'autre sens les moteurs disposés de l'autre côté, par exemple pour permettre la rotation sur place du véhicule.

Les distributeurs précités sont réunis en batterie avec des distributeurs D.LAV et D.LAR comandant l'alimentation des vérins hydrauliques 20 actionnant les lorrys 11, respectivement avant et arrière. Ces distributeurs sont reliés électriquement à un boîtier de commande 60. Cette batterie de distributeurs est reliée par des conduits 50, 52 à une pompe 53, disposée dans le groupe hydraulique 45.

Enfin, un correcteur d'assiette 54 est disposé sur les circuits électriques des distributeurs D.ARD, D.ARG, D.AVD et D.AVG, pour les commander dans le sens du maintien de l'horizontabilité de la plate-forme lors du transfert transversal du véhicule. Le circuit électrique 55 alimentant ce correcteur d'assiette est muni d'un coupe-circuit 56, permettant d'interrompre, au moins temporairement, son fonctionnement.

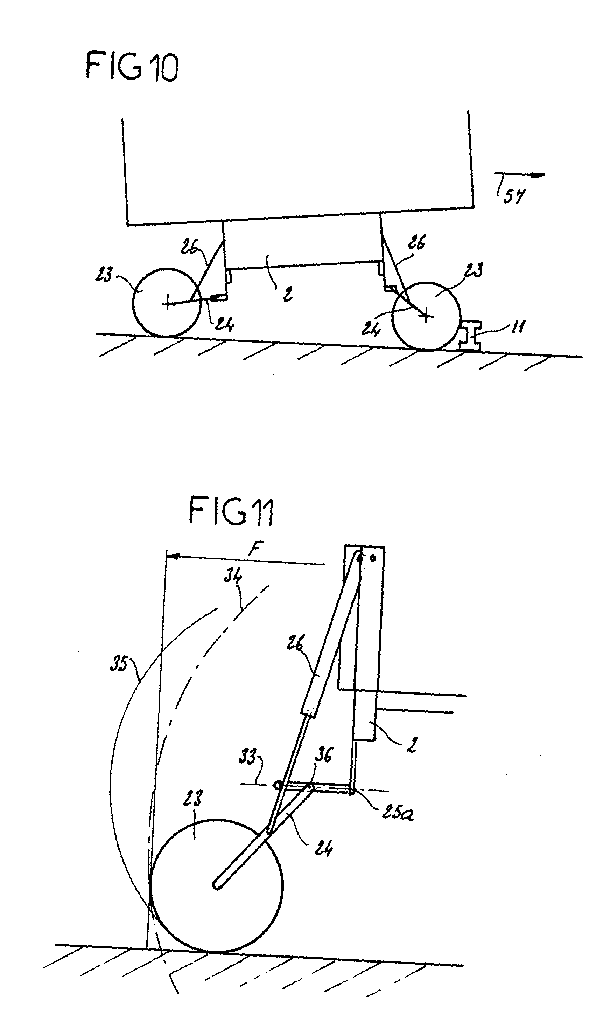

Lorsque ce correcteur d'assiette 54 est mis hors service, l'opérateur peut, par le levier 39 de la commande universelle, actionner certains distributeurs commandant les mouvements des bras 24 pour, en modifiant l'assiette de la plate-forme 4, transférer une partie de la charge sur les roues 23 rencontrant le moins de résistance. Ainsi, la figure 10 montre que lors du déplacement du véhicule dans le sens de la flèche 57 pour passer sur le premier rail 21 d'une voie, l'actionnement des distributeurs D.AVG et D.AVD, dans le sens du relevage des bras 24, entraîne le basculement sur la gauche de la plate-forme et le report sur les roues 23 situées à gauche, d'une partie de la charge jusqu'alors supportée par les roues 23, situées à droite.

Ces dernières sont ainsi soumises à une charge moindre et peuvent plus facilement rouler sur le rail 21 de la voie pour le franchir. Il est évident que l'inclinaison de la plate-forme est limitée de manière que la projection du centre de gravité du véhicule sur le plan horizontal reste dans le polygone de sustentation de ce véhicule.

Ces divers aménagements des circuits hydrauliques et électriques améliorent les conditions d'enraillage qui s'effectue en positionnement d'abord au-dessus de la voie les deux roues pour rail 14 disposées en avant du véhicule, puis en positionnant les deux roues pour rail 16 qui sont à l'arrière. Après vérification générale de la position de ces roues 14 et 16, les vérins 26 sont alimentés dans le sens de l'escamotage des roues 23, pour assurer l'enraillage.

## Revendications

1. Véhicule route-rail pour travaux ferroviaires dans lequel le châssis (2) est muni d'une plate-forme (4) de réception d'outils divers et est équipé d'un premier jeu (A) de roues (6 et 8) pour la circulation sur route avec des roues directrices (6) et des roues motrices (8), et d'un second jeu (B) de roues motrices (14 et 16) pour la circulation sur rails, les essieux des roues du second jeu étant parallèles aux essieux des roues du premier jeu et étant portés par des moyens (18) aptes à les déplacer entre une position d'effacement, dans laquelle leurs roues sont au-dessus du sol, et une position de travail, dans laquelle ces roues sont au-dessous du plan d'appui des roues (6 et 8) du premier jeu (A), ce châssis (2), comportant pour ses manoeuvres transversales d'enraillage, un troisième jeu (C) de roues (23) dans lequel chaque roue est montée à l'une des extrémités d'un bras (24) dont l'autre extrémité est articulée sous le châssis, ce bras étant mobile entre une position d'escamotage et une position de travail dans laquelle la roue est en appui sur le sol avec son axe de rotation perpendiculaire à ceux des premier et deuxième jeux (A et B), caractérisé en ce que chacune des roues (23) du troisième jeu (C) de roues est munie d'un pneumatique et est liée au rotor d'un moteur hydraulique (29), à sens de rotation réversible, ce moteur étant porté par le bras (24) et commandé par au moins un boîtier (51) comportant une commande manuelle agissant séparément au moins sur les moteurs disposés de chacun des côtés du troisième jeu (C) de roues, tandis que chacun des bras (24) portant l'un de ces moteurs (29) est relié au châssis (2) par un vérin hydraulique à double effet (26) dont la commande d'alimentation est indépendante de celles des vérins (26) des autres bras (24).

2. Véhicule route-rail selon la revendication 1, caractérisé en ce que la commande d'alimentation des vérins (26) d'actionnement des bras (24) du troisième jeu (C) de roues comprend des distributeurs D.AVD, D.AVG, D.ARD et D.ARG, des moyens commandant ces distributeurs, et, en parallèle à ces moyens de commande, un correcteur d'assiette (54) apte à maintenir horizontale la plate-forme porte-outil (4), ce correcteur d'assiette étant associé à des moyens (55) permettant d'interrompre sa liaison avec le circuit électrique de commande des distributeurs D.AVD, D.AVG, D.ARD et D.ARG.

3. Véhicule route-rail selon la revendication 1, caractérisé en ce que chacun des bras (24) du troisième jeu (C) de roues est relié au châssis (2) par une articulation dont l'axe (33) est horizontal et est incliné, dans le plan horizontal, de 45° par rapport à l'axe longitudinal du véhicule.

4. Véhicule route-rail selon la revendication 1, caractérisé en ce que les roues (23) du troisième jeu de roues sont équipées de pneumatiques basse pression.

## Patentansprüche

1. Straßen/Schienen-Fahrzeug für Eisenbahnbauarbeiten, bei dem der Rahmen (2) mit einer Plattform (4) zur Aufnahme von verschiedenen Werkzeugen versehen und mit einem ersten Satz (A) von Rädern (6 und 8) für das Fahren auf der Straße mit Lenkrädern (6) und Antriebsrädern (8) und einem zweiten Satz (B) von Antriebsrädern (14 und 16) für das Fahren auf Schienen ausgestattet ist, wobei die Achsen der Räder des zweiten Satzes parallel zu den Achsen der Räder des ersten Satzes sind und von Mitteln (18) getragen werden, die in der Lage sind, sie zwischen einer Einrückstellung, in der ihre Räder sich über dem Boden befinden, und einer Arbeitsstellung zu verschieben, in der diese Räder sich unter der Auflagefläche der Räder (6 und 8) des ersten Satzes (A) befinden, wobei dieser Rahmen (2) für sein Quermanövrieren zur Positionierung auf den Schienen einen dritten Satz (C) von Rädern (23) aufweist, bei dem jedes Rad an einem der Enden eines Auslegers (24) angebracht ist, dessen anderes Ende unter dem Rahmen gelenkig gelagert ist, wobei dieser Ausleger zwischen einer Einklappstellung und einer Arbeitsstellung beweglich ist, in der das Rad auf dem Boden aufliegt, mit seiner Drehachse senkrecht zu denen des ersten und zweiten Satzes (A und B), dadurch gekennzeichnet, daß jedes der Räder (23) des dritten Radsatzes (C) mit einem Reifen versehen ist und mit dem Rotor eines Hydraulikmotors (29) mit umkehrbarer Drehrichtung verbunden ist, wobei dieser Motor durch den Ausleger (24) getragen wird und durch zumindest eine Steuerbrücke (51) betätigt wird, die eine manuelle Steuerung umfaßt, die getrennt zumindest auf die auf beiden Seiten des dritten Radsatzes (C) angeordneten Motoren einwirkt, während jeder der einen dieser Motoren (29) tragenden Ausleger (24) mit dem Rahmen (2) durch einen doppeltwirkenden Hydrauklikzylinder (26) verbunden ist, dessen Versorgungssteuerung unabhängig von denjenigen der Zylinder (26) der anderen Ausleger (24) ist.

2. Straßen/Schienen-Fahrzeug gemäß Anspruch 1, dadurch gekennzeichnet, daß die Versorgungssteuerung der Zylinder (26) zur Betätigung der Ausleger (24) des dritten Radsatzes (C) Wegeventile D.AVD, D.AVG, D.ARD und D.ARG, diese Wegeventile steuernde Mittel und parallel zu diesen Steuermitteln einen Trimmegler (54) umfaßt, der in der Lage ist, die Werkzeugträgerplattform (4) horizontal zu halten, wobei dieser Trimmregler mit Mitteln (55) versehen ist, die es erlauben, seine Verbindung mit der elektrischen Steuerschaltung der Wegeventile D.AVD, D.AVG, D.ARD und D.ARG zu unterbrechen.

3. Straßen/Schienen-Fahrzeug gemäß Anspruch 1, dadurch gekennzeichnet, daß jeder der Ausleger (24) des dritten Satzes (C) von Rädern durch ein Gelenk mit dem Rahmen (2) verbunden ist, dessen Achse (33) horizontal liegt und in der horizontalen Ebene um 45° relativ zur Längsachse des Fahrzeugs geneigt ist.

4. Straßen/Schienen-Fahrzeug gemäß Anspruch 1, dadurch gekennzeichnet, daß die Räder (23) des dritten Radsatzes mit Niederdruckreifen ausgestattet sind.

## Claims

1. A road-rail vehicle for railway works, in which the chassis (2) is provided with a platform (4) for receiving various tools and is equipped with a first set (A) of wheels (6 and 8) for driving on the road, with steered wheels (6) and drive wheels (8), and a second set (B) of drive wheels (14 and 16) for driving on rails, the axles of the wheels of the second set being parallel to the axles of the wheels of the first set and being carried by means (18) capable of moving them between a suppressed position in which their wheels are above the ground and an operative position in which these wheels are below the bearing plane of the wheels (6 and 8) of the first set (A), this chassis (2) having, for its transverse manoeuvres for rerailing, a third set (C) of wheels (23) of which each wheel is mounted on one of the ends of an arm (24) whereof the other end is articulated below the chassis, this arm being movable between a retracted position and an operative position in which the wheel bears against the ground with its axis of rotation perpendicular to those of the first and second sets (A and B), characterised in that each of the wheels (23) of the third set (C) of wheels is provided with a tyre and is connected to the rotor of a hydraulic motor (29), having a reversible direction of rotation, this motor being carried by the arm (24) and controlled by at least one box (51) having a manual control acting separately at least on the motors arranged on each side of the third set (C) of wheels, while each of the arms (24) carrying one of these motors (29) is connected to the chassis (2) by a hydraulic double-acting jack (26) whereof control of the power supply is independent of those of the jacks (26) of the other arms (24).

2. A road-rail vehicle according to Claim 1, characterised in that control of the power supply to the jacks (26) for actuation of the arms (24) of the third set (C) of wheels comprises distributors D.AVD, D.AVG, D.ARD and D.ARG, means controlling these distributors and, in parallel with these control means, an inclination compensation means (54) capable of keeping the tool-carrying platform (4) horizontal, this inclination compensation means being associated with means (55) allowing its connection to the electrical control circuit for the distributors D.AVD, D.AVG, D.ARD and D.ARG to be broken.

3. A road-rail vehicle according to Claim 1, characterised in that each of the arms (24) of the third set (C) of wheels is connected to the chassis (2) by a link whereof the axis (33) is horizontal and is at an angle of 45° in the horizontal plane with respect to the longitudinal axis of the vehicle.

4. A road-rail vehicle according to Claim 1, characterised in that the wheels (23) of the third set of wheels are equipped with low-pressure tyres.
